# EUROPÄISCHE PATENTSCHRIFT

(11) **EP 2 880 746 B1**
(45) Veröffentlichungstag und Bekanntmachung des Hinweises auf die Patenterteilung: **27.11.2019**
(21) Anmeldenummer: 13739970.5
(22) Anmeldetag: 17.07.2013
(51) Int. Cl.: H02K 5/18, H02K 5/20, H02K 9/06, H02K 11/33, H02K 9/14

(54) **AKTIVE KÜHLUNG EINES MOTORS**
ACTIVE COOLING OF A MOTOR
REFROIDISSEMENT ACTIF D'UN MOTEUR

(30) Priorität: 02.08.2012 DE 102012107107
(43) Veröffentlichungstag der Anmeldung: 10.06.2015
(73) Patentinhaber: EBM-Papst Mulfingen GmbH&CO. KG, 74673 Mulfingen (DE)
(72) Erfinder: HAAG, Christian, 74673 Mulfingen (DE); WALTER, Sven, 97980 Bad Mergentheim-Rengershausen (DE); SUDLER, Björn, 97944 Boxberg-Schwabhausen (DE); HAAF, Oliver, 74635 Kupferzell (DE)
(74) Vertreter: Staeger & Sperling Partnerschaftsgesellschaft mbB
(86) Internationale Anmeldenummer: PCT/EP2013/065098
(87) Internationale Veröffentlichungsnummer: WO 2014/019854

(56) Entgegenhaltungen:
- EP-A2- 2 405 561
- DE-A1- 10 313 273
- US-A- 2 778 958
- US-A- 4 908 538
- US-A1- 2011 074 235

## Beschreibung

Die Erfindung betrifft einen Motor, umfassend ein Elektronikgehäuse, einen Stator mit einer Statorbuchse und einen Rotor, wobei der Motor mit der Statorbuchse an einer Befestigungswand befestigbar ist.

Derartige Motoren werden insbesondere zum Antrieb von Ventilatoren verwendet und weisen eine integrierte Elektronik, insbesondere eine Kommutierungselektronik, auf. Der maximale Leistungsbereich der Motoren wird in der Regel durch maximale Bauteil-Temperaturen der Elektronik, zum Beispiel der elektrischen Leistungsbauteile wie Endstufen, oder des Motors, zum Beispiel der Motorwicklung oder der Kugellager, begrenzt. Die Lebensdauer des Motors ist ebenfalls abhängig von den während des Betriebs des Motors erreichten Bauteil-Temperaturen, wobei erhöhte Temperaturen die Lebensdauer des Motors verkürzen.

Die Motoren werden insbesondere an einer stabilen Befestigungswand befestigt, die zum Beispiel Teil eines Einbaugehäuses ist, in dem der Ventilator eingebaut wird. Dabei wird in der Regel das Elektronikgehäuse in eine Montageöffnung der Befestigungswand eingesteckt und der Motor mittels der Statorbuchse an der Befestigungswand befestigt. Eine derartige Befestigung erschwert eine effektive Kühlung des Motors beziehungsweise der Elektronik, da ein Umströmen des Motors und des Elektronikgehäuses in axialer Richtung des Motors durch die Befestigungswand behindert wird. Zudem wird insbesondere bei Radialventilatoren der Motor durch die radiale Abströmung der Luft schlecht oder gar nicht umströmt. Bei Axialventilatoren entsteht im Bereich der Rotorglocke ein sogenanntes Totwassergebiet, welches ebenfalls eine Umströmung des Motors negativ beeinflusst.

Ähnliche Motoren sind beispielsweise aus den Schriften DE 103 13 273 A1, US 2 778 958 A, US 4 908 538 A, EP 2 405 561 A2 und US 2011/074235 A1 bekannt.

Der Erfindung liegt die Aufgabe zugrunde, einen Motor zu schaffen, dessen Kühlung verbessert und dessen Leistung und Lebensdauer bei gleicher Umgebungstemperatur erhöht wird.

Die Aufgabe wird durch einen Motor nach Anspruch 1 gelöst.

Ein solcher Motor ermöglicht eine aktive und gezielte Kühlung temperaturkritischer Bauteile des Motors, insbesondere der Motorelektronik und des Kugellagers des Stators, durch einen vom Luftförderelement erzeugten Luftvolumenstrom. Der Luftvolumenstrom wird anhand des Luftleitelementes und des Strömungsspaltes des Strömungsraumes an die besonders zu kühlenden Bauteile des Motors, insbesondere an die Statorbuchse und an den Bereich des Elektronikgehäuses, gezielt geleitet und verstärkt die Kühlung im Vergleich zu passiver Kühlung mittels Konvektion durch die herkömmliche Umgebungsluft. Dadurch werden eine erhöhte Leistung und eine längere Lebensdauer des Motors ermöglicht.

In einer bevorzugten Ausführungsform des Motors ist das Luftförderelement als Radiallüfterrad ausgebildet. Das Radiallüfterrad saugt den Luftvolumenstrom axial an und bläst ihn radial aus, so dass der Luftvolumenstrom besonders effektiv und parallel zur Motorachse strömend erzeugt werden kann.

Je nach Ausführungsform des Motors ist eine Kühlung des Elektronikgehäuses wichtiger als eine Kühlung der Statorbuchse, oder bei einer speziellen Anwendung oder Einbausituation hat die Umgebungsluft im Bereich des Elektronikgehäuses eine niedrigere Temperatur als im Bereich des Rotors.

In einer ersten Ausführungsform der Erfindung ist das Luftleitelement an der Befestigungswand befestigbar und zwischen der Befestigungswand und dem Luftförderelement angeordnet, wobei die Ansaugöffnung des Luftförderelements in Richtung der Befestigungswand ausgerichtet ist. Dabei erzeugt das Luftförderelement im Motorbetrieb einen Unterdruck im Bereich seiner

Ansaugöffnung und der gegenüberliegenden Durchströmöffnung des Luftleitelements. Durch das Luftleitelement wird ein Luftvolumenstrom durch eine in der Befestigungswand angeordnete Kanalöffnung und durch den Strömungsspalt in den Strömungsraum und entlang der Außenumfangsfläche der Statorbuchse bis zur Durchströmöffnung des Luftleitelements geleitet und vom Luftförderelement aus der Richtung der Befestigungswand axial an seiner Ansaugöffnung angesaugt und radial im Bereich des Rotors ausgeblasen. In dieser Ausführungsform der Erfindung wird der zu kühlende Luftvolumenstrom zunächst im Bereich des Elektronikgehäuses angesaugt und somit das Elektronikgehäuse besonders stark gekühlt und die Kühlwirkung allgemein verbessert.

Alternativ ist eine Kühlung der Statorbuchse wichtiger als eine Kühlung des Elektronikgehäuses, oder bei einer speziellen Anwendung oder Einbausituation hat die Umgebungsluft im Bereich des Rotors eine niedrigere Umgebungstemperatur als im Bereich des Elektronikgehäuses.

Bei einer zweiten Ausführungsform des Motors ist das Luftleitelement an der Befestigungswand befestigbar und das Luftförderelement innerhalb des Luftleitelementes angeordnet, wobei die Ansaugöffnung des Luftförderelements von der Befestigungswand wegweisend ausgerichtet ist. Dabei erzeugt das Luftförderelement im Motorbetrieb einen Unterdruck im Bereich seiner Ansaugöffnung und saugt die zu kühlende Luft axial durch die Durchströmöffnung des Luftleitelementes aus der der Befestigungswand gegenüberliegenden Richtung im Bereich des Rotors an und bläst sie radial in den Strömungsraum. Durch das Luftleitelement wird ein Luftvolumenstrom durch den Strömungsraum und entlang der Außenumfangsfläche der Statorbuchse durch den Strömungsspalt und durch die Kanalöffnung der Befestigungswand bis zu einem Außenumfang des Elektronikgehäuses geleitet. In der alternativen Ausführungsform der Erfindung wird der kühlende Luftvolumenstrom rotorseitig angesaugt und somit die Statorbuchse zunächst besonders stark gekühlt und die Kühlwirkung allgemein verbessert.

Erfindungsgemäß umfasst der Motor einen am Außenumfang des Elektronikgehäuses angeordneten Luftleitkanal, der an der Befestigungswand befestigbar ist, wobei der Luftleitkanal von einer im Bereich des Strömungsraums angeordneten Kanalöffnung in der Befestigungswand zu einem zu kühlenden Bereich am Außenumfang des Elektronikgehäuses verläuft.

Eine derartige Ausbildung des Motors ermöglicht die aktive Kühlung des Elektronikgehäuses auch bei einer Montage an einer Befestigungswand mit Montageöffnung, ohne wesentliche Modifikationen bestehender Motorentypen zu benötigen, da keine Modifikationen des Elektronikgehäuses oder der Statorbuchse nötig sind. Je nach Einbausituation muss lediglich eine zusätzliche Verbindungsöffnung in der Befestigungswand für die Verbindung von Luftleitkanal und Luftleitelement vorgesehen, beziehungsweise eine bestehende Öffnung vergrößert oder angepasst werden, so dass der Luftleitkanal und das Luftleitelement ausreichend miteinander verbunden werden.

In einer weiteren Ausführungsform der Erfindung weist der Luftleitkanal an seinem am Außenumfang des Elektronikgehäuses anliegenden Ende einen ringförmig umlaufenden Ansatz auf, der sich insbesondere an den Außenumfangsverlauf des Elektronikgehäuses beziehungsweise der Gehäusekühlrippen anpasst.

Der Ansatz vergrößert die Fläche des Elektronikgehäuses, die vom Luftleitkanal abgedeckt wird und somit vom Luftvolumenstrom gekühlt wird.

In einer weiteren Ausführungsform der Erfindung weist das Luftförderelement auf der Seite des Luftleitelementes am Rand der Ansaugöffnung einen trichterförmigen Ringkragen und das Luftleitelement auf der Seite des Luftförderelementes am Rand der Durchströmöffnung eine umlaufende Ringnut auf, wobei der Ringkragen in die Ringnut hineinragt und Ringkragen und Ringnut den Dichtspalt bilden. Dies ermöglicht eine verbesserte strömungstechnische Abdichtung zwischen der Ansaugöffnung des Luftförderelementes und der Durchströmöffnung des Luftleitelementes.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: eine dreidimensionale Explosionszeichnung einer ersten Ausführungsform eines erfindungsgemäßen Motors mit Tragkonstruktion,
- Fig. 2: eine Seitenansicht der ersten Ausführungsform eines erfindungsgemäßen Motors mit Tragkonstruktion mit Teilquerschnitt im Bereich des Luftleitelements und des Luftleitkanals,
- Fig. 3: eine Seitenansicht einer zweiten Ausführungsform eines erfindungsgemäßen Motors mit Tragkonstruktion mit Teilquerschnitt im Bereich des Luftleitelements und des Luftleitkanals.

Die gleichen Bauteile sind in allen Figuren mit denselben Bezugszeichen versehen.

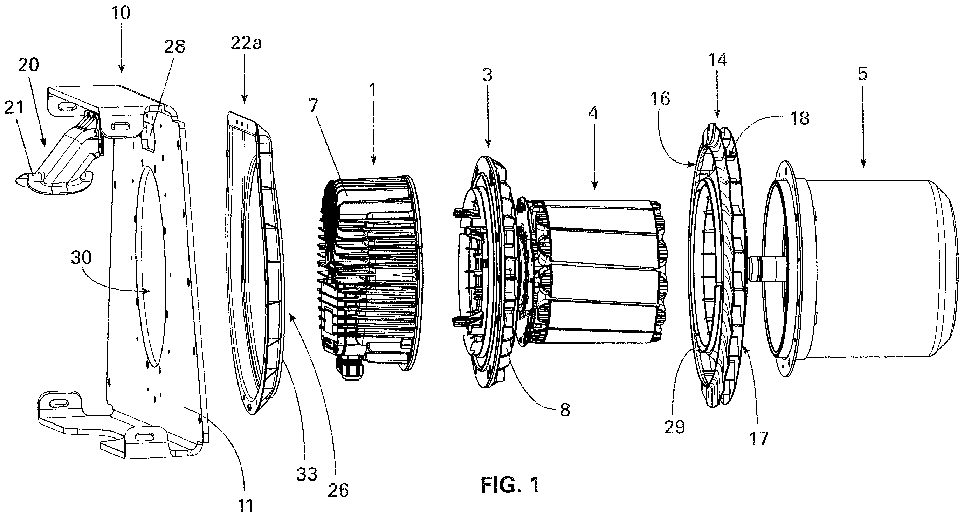

Fig. 1, Fig. 2 und Fig. 3 zeigen jeweils einen erfindungsgemäßen Motor, insbesondere einen Außenläufermotor. Der Motor umfasst ein Elektronikgehäuse 1, einen Stator, umfassend eine Statorbuchse 3 und ein Statorblechpaket 4 mit Motorwicklungen, und einen Rotor 5, insbesondere einen Außenläuferrotor. Die Statorbuchse 3 und das Elektronikgehäuse 1 sind insbesondere aus Metall. In dem Elektronikgehäuse 1 befindet sich unter anderem die Motorelektronik zum Antrieb und zur Steuerung des Motors insbesondere die Kommutierungselektronik mit elektrischen Leistungsbauteilen wie Endstufen. Das Elektronikgehäuse 1 weist an seiner Außenwandung Gehäusekühlrippen 7 zur Kühlung von nicht dargestellten elektronischen Bauelementen innerhalb des Elektronikgehäuses 1 auf. Die Statorbuchse 3 weist an ihrer Außenwandung radial verlaufende Statorkühlrippen 8 auf, die die durch den Stator erzeugte Wärme, insbesondere durch im Stator eingebaute, nicht dargestellte Kugellager und Motorwicklungen, ableiten.

Der Motor wird zur Befestigung insbesondere mittels der Statorbuchse 3 an eine Tragkonstruktion 10 oder an eine Befestigungswand 11 mit einer Montageöffnung 30 montiert. Die Befestigungswand 11 kann in einer Ausführungsform der Erfindung Teil einer als Bestandteil des Motors ausgebildeten Tragkonstruktion 10 sein, so dass die Tragkonstruktion 10 die Befestigungswand 11 bildet. Alternativ kann sich die Befestigungswand 11 aus der Einbausituation, z.B. als Wand eines Einbaugehäuses, in das der Motor montiert wird, ergeben. Der Motor wird derart in der Montageöffnung 30 montiert, dass sich das Elektronikgehäuse 1 auf der einen Seite der Befestigungswand 11, und der Stator sowie der Rotor 5 des Motors auf der anderen Seite der Befestigungswand 11 befinden.

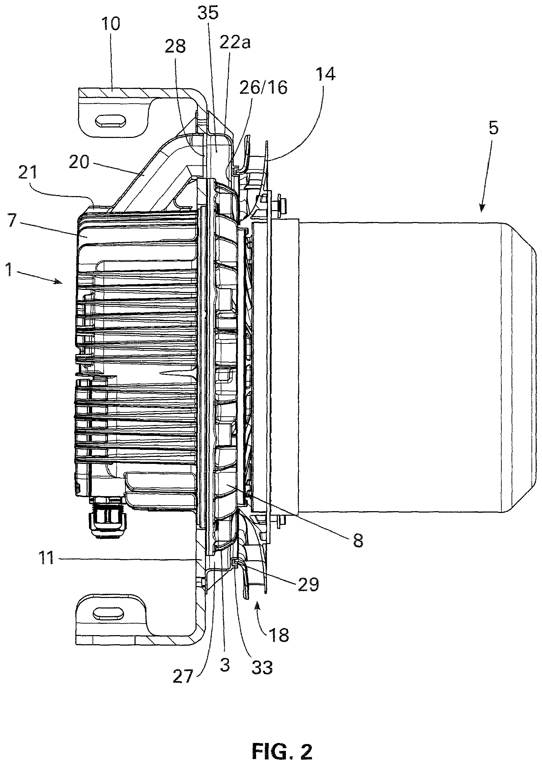

Der Motor weist erfindungsgemäß ein Luftleitelement 22a, 22b und ein Luftförderelement 14 auf, die beide ringförmig ausgebildet sind und den Stator umschließen. Dabei weist das Luftleitelement 22a, 22b auf der Seite des Rotors 5 eine Durchströmöffnung 26 auf. Bei der Ausführungsform in Fig. 1 und Fig. 2 ist der Durchmesser der Durchströmöffnung 26 insbesondere derart dimensioniert ist, dass sowohl das Elektronikgehäuse 1 als auch die Statorbuchse 3 durch die Durchströmöffnung 26 gesteckt werden können. Dies ermöglicht eine vom Motor unabhängige Montage des Luftleitelementes 22a an der Befestigungswand 11. Das Luftleitelement 22a, 22b umgibt den Stator insbesondere schalenartig im Bereich der Statorbuchse 3 und wobei zwischen dem Luftleitelement 22a, 22b und einem Außenumfang der Statorbuchse 3 ein umlaufender Strömungsraum 35 gebildet wird. Das Luftleitelement 22a, 22b und das Luftförderelement 14 bestehen insbesondere aus Kunststoff. Während des Betriebs des Motors wird das Luftförderelement 14 über den Motor angetrieben. Das Luftförderelement 14 ist insbesondere als Radiallüfterrad ausgebildet und auf dem Stator drehbar gelagert und mit dem Rotor 5 drehfest verbunden. Dabei wird eine Ringöffnung 17 des Luftförderelements 14 rotorseitig vom Rotor 5 abgedeckt. Das Luftförderelement 14 weist eine in axialer Richtung geöffnete umlaufende Ansaugöffnung 16 auf, die mit einer in radialer Richtung geöffneten umlaufenden Ausblasöffnung 18 strömungstechnisch im Inneren des Luftförderelementes 14 verbunden ist. Die Ansaugöffnung 16 des Luftförderelements 14 liegt der Durchströmöffnung 26 des Luftleitelementes 22a, 22b gegenüber, wobei das Luftförderelement 14 mit der axialen Ansaugöffnung 16 über einen Dichtspalt in der axialen Durchströmöffnung 26 des Luftleitelements 22a, 22b mündet. Dabei ist es besonders vorteilhaft, wenn das Luftförderelement 14 auf der Seite des Luftleitelementes 22a, 22b am Rand einer Umfangswandung der Ansaugöffnung 16 einen trichterförmigen Ringkragen 29 und das Luftleitelement 22a auf der Seite des Luftförderelementes 14 am Rand der Durchströmöffnung 26 eine umlaufende Ringnut 33 aufweist, wobei der Ringkragen 29 in die Ringnut 33 hineinragt und Ringkragen 29 und Ringnut 33 den Dichtspalt bilden. Dies ermöglicht eine strömungstechnische Optimierung des Übergangs vom Luftleitelement zum Luftförderelement. Das Luftförderelement 14 ist derart ausgebildet, dass es im Motorbetrieb an seiner Ansaugöffnung 16 einen Unterdruck erzeugt und einen Luftvolumenstrom radial an seiner Ausblasöffnung 18 ausbläst.

Radial zwischen dem Luftleitelement 22a, 22b und dem Außenumfangsrand der Statorbuchse 3 wird auf der Seite des Elektronikgehäuses 1 ein umlaufender Strömungsspalt 27 gebildet, so dass der Strömungsraum 35 an der Seite des Elektronikgehäuses 1 in Richtung der Befestigungswand 11 geöffnet ist, wobei der Strömungsspalt 27 im montierten Zustand durch die Befestigungswand 11 zumindest teilweise axial abgedeckt wird. Im Bereich des Strömungsspaltes 27 weist die Befestigungswand 11 mindestens eine axial verlaufende Kanalöffnung 28 auf. Mindestens ein Luftleitkanal 20 ist auf der dem Luftleitelement 22a, 22b gegenüberliegenden Seite der Befestigungswand 11 am Außenumfang des Elektronikgehäuses 1 angeordnet und verläuft von der Kanalöffnung 28 der Befestigungswand 11 in Richtung mindestens eines zu kühlenden Bereiches des Elektronikgehäuses 1 am Außenumfang des Elektronikgehäuses 1. Der Luftleitkanal 20 ist insbesondere an der Befestigungswand 11 befestigbar und ist insbesondere aus Kunststoff. Der Luftleitkanal 20 weist an seinem am Außenumfang des Elektronikgehäuses 1 anliegenden Ende einen ringförmig umlaufenden Ansatz 21 auf, der sich insbesondere an den Außenumfangsverlauf des Elektronikgehäuses 1, insbesondere der Gehäusekühlrippen 7, formmäßig anpasst. Hierdurch deckt der Ansatz 21 zusammen mit dem Ende des Luftleitkanals 20 einen Bereich der Gehäusekühlrippen 7 umfangsgemäß ab und bildet mehrere Kühlkanäle, die zwischen den Gehäusekühlrippen 7 verlaufen. Bei dieser Ausführungsform des Motors wird ein ausgewählter, vom Ende des Luftleitkanals 20 abgedeckter Bereich des Elektronikgehäuses 1 gezielt gekühlt. Dies ist insbesondere der Bereich, in dem im Inneren des Elektronikgehäuses 1 die besonders zu kühlenden elektronischen Bauelemente angeordnet sind. Es ist jedoch auch denkbar, mehrere Kanalöffnungen 28 in der Befestigungswand 11 im Bereich des Strömungsspaltes 27 über den Umfang des Motors verteilt anzuordnen, so dass mehrere Luftleitkanäle 20 mehrere Bereiche des Elektronikgehäuses 1 kühlen.

In der in Fig. 1 und Fig. 2 dargestellten ersten Ausführungsform ist das Luftleitelement 22a an der Befestigungswand 11 befestigbar und zwischen der Befestigungswand 11 und dem Luftförderelement 14 angeordnet, wobei die Ansaugöffnung 16 des Luftförderelements 14 in Richtung der Befestigungswand 11 ausgerichtet ist. Im Motorbetrieb erzeugt das Luftförderelement 14 einen Unterdruck im Bereich seiner Ansaugöffnung 16 und der gegenüberliegenden Durchströmöffnung 26 des Luftleitelements 22a. Ein Luftvolumenstrom wird über den Strömungsraum 35 und den Luftleitkanal 20 angesaugt. Dabei strömt der Luftvolumenstrom zunächst entlang der Gehäusekühlrippen 7 des Elektronikgehäuses 1, wobei er Wärme des Elektronikgehäuses 1 beziehungsweise der Oberfläche der Gehäusekühlrippen 7 aufnimmt. Dadurch wird das Elektronikgehäuse 1 gekühlt, welches über im Elektronikgehäuse 1 angeordnete Kühlkörper bestimmte zu kühlende elektronische Bauteile kühlt. Der Ansatz 21 des Luftleitkanals 20 vergrößert den Ansaugweg durch die Gehäusekühlrippen 7 zusätzlich und verstärkt damit die Kühlwirkung. Danach strömt der Luftvolumenstrom durch den Luftleitkanal 20 und durch die Kanalöffnung 28 der Befestigungswand 11 und durch den Strömungsspalt 27 in den Strömungsraum 35 und entlang der Außenumfangsfläche der Statorbuchse 3 bis zur Durchströmöffnung 26 des Luftleitelements 22a und wird dort vom Luftförderelement 14 axial an seiner Ansaugöffnung 16 angesaugt und radial im Bereich des Rotors 5 aus der Ausblasöffnung 18 ausgeblasen. Durch den umlaufenden Strömungsraum 35 und die umlaufende Ansaugöffnung 16 des Luftförderelementes 14 verteilt sich der Luftvolumenstrom zur Kühlung der Statorbuchse 3 am Umfang der Statorbuchse 3 und wird insbesondere entlang der Statorkühlrippen 8 der Statorbuchse 3 geleitet, wo er Wärme des Stators beziehungsweise der Oberfläche der Statorkühlrippen 8 aufnimmt.

In der ersten Ausführungsform der Erfindung wird der kühlende Luftvolumenstrom zunächst im Bereich des Elektronikgehäuses 1 beziehungsweise durch den Luftleitkanal 20 an dem Außenumfang des Elektronikgehäuses 1 angesaugt. Dadurch kommt der Luftvolumenstrom zunächst mit dem Elektronikgehäuse 1 in Kontakt, so dass das Elektronikgehäuse 1 besonders stark gekühlt wird. Dies ist insbesondere dann besonders vorteilhaft, wenn die Umgebungsluft auf der Seite des Elektronikgehäuses 1 eine niedrigere Temperatur als im Bereich des Rotors 5 aufweist.

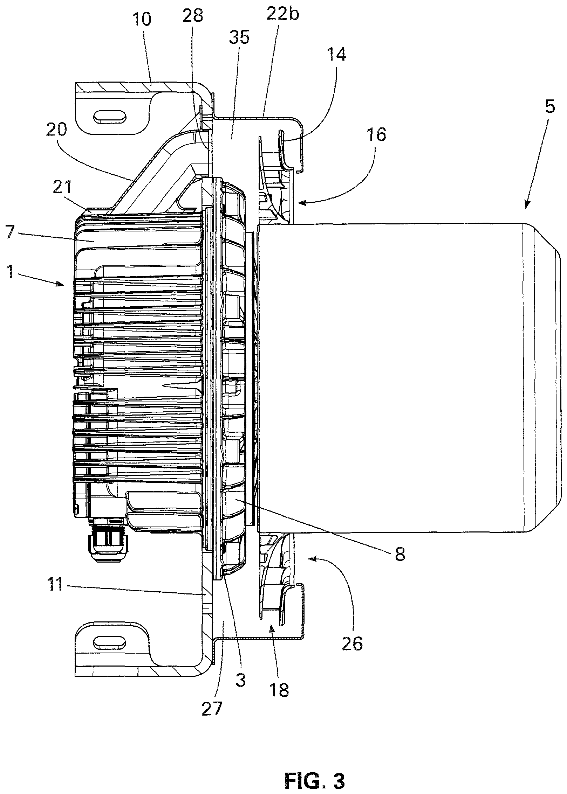

In der in Fig. 3 dargestellten zweiten Ausführungsform ist das Luftleitelement 22b an der Befestigungswand 11 befestigbar und das Luftförderelement 14 innerhalb des Luftleitelementes 22b angeordnet, wobei die Ansaugöffnung 16 des Luftförderelements 14 von der Befestigungswand 11 wegweisend ausgerichtet ist. Das Luftleitelement 22b umgibt auch das Luftförderelement 14. Im Vergleich zur ersten Ausführungsform ist das Luftförderelement 14 um 180° gedreht. Dadurch ändert sich die Strömungsrichtung des Luftvolumenstroms. Im Motorbetrieb erzeugt das Luftförderelement 14 einen Unterdruck im Bereich seiner Ansaugöffnung 16 und der benachbarten Durchströmöffnung 26 des Luftleitelements 22b und saugt die Luft im Bereich des Rotors 5 axial an und bläst die Luft radial durch die Ausblasöffnung 18 in den Strömungsraum 35 aus. Dadurch wird ein Überdruck im Strömungsraum 35 gebildet, wodurch der Luftvolumenstrom entlang der Außenumfangsfläche der Statorbuchse 3 und insbesondere entlang der Statorkühlrippen 8 durch den Strömungsspalt 27 und die Kanalöffnung 28 und den Luftleitkanal 20 strömt, wobei er Wärme des Stators beziehungsweise der Oberfläche der Statorkühlrippen 8 aufnimmt und die Bauteile des Stators kühlt. Der Luftvolumenstrom tritt am Ende des Luftleitkanals 20 am Außenumfang des Elektronikgehäuses 1 aus und wird zwischen die Gehäusekühlrippen 7 geblasen, wodurch zusätzlich das Elektronikgehäuse 1 gekühlt wird.

In der zweiten Ausführungsform der Erfindung wird der kühlende Luftvolumenstrom zunächst im Bereich des Rotors 5 angesaugt. Dadurch kommt der Luftvolumenstrom zunächst mit dem Stator in Kontakt, so dass der Stator besonders stark gekühlt wird. Dies ist insbesondere dann besonders vorteilhaft, wenn die Umgebungsluft auf der Seite des Rotors 5 eine niedrigere Temperatur als im Bereich des Elektronikgehäuses 1 aufweist.

Die Erfindung ist nicht auf die dargestellten und beschriebenen Ausführungsbeispiele beschränkt, sondern umfasst auch alle im Sinne der Erfindung gleichwirkenden Ausführungen, wie in den beiliegenden Ansprüche beansprucht.

## Patentansprüche

1. Motor ausgebildet als Außenläufermotor, umfassend ein Elektronikgehäuse (1), eine Befestigungswand (11), einen Stator mit einer Statorbuchse (3) und ein Statorblechpaket (4) mit Motorwicklungen, einen Rotor (5) und ein mit dem Rotor (5) drehfest verbundenes, ringförmiges Luftförderelement (14), wobei der Motor mit der Statorbuchse (3) an der eine Montageöffnung (30) aufweisenden Befestigungswand (11) derart befestigt ist, dass sich das Elektronikgehäuse (1) auf der einen Seite der Befestigungswand (11) und der Stator sowie der Rotor (5) auf der anderen Seite der Befestigungswand (11) befinden, und wobei das Elektronikgehäuse (1) an einer Außenwand Gehäusekühlrippen (7) aufweist, ferner umfassend ein an der Befestigungswand (11) von dem Motor unabhängig montierbares ringförmiges Luftleitelement (22a, 22b), wobei das Luftleitelement (22a, 22b) die Statorbuchse (3) umgibt und zwischen dem Luftleitelement (22a, 22b), der Befestigungswand (11) und einem Außenumfang der Statorbuchse (3) ein in Umfangsrichtung umlaufender Strömungsraum (35) gebildet wird, wobei der Strömungsraum (35) an der Seite des Elektronikgehäuses (1) durch mindestens einen Strömungsspalt (27) in Richtung der Befestigungswand (11) geöffnet ist, und wobei das Luftförderelement (14) mit einer in axialer Richtung geöffneten, umlaufenden Ansaugöffnung (16) über einen Dichtspalt in einer rotorseitigen, umlaufenden Durchströmöffnung (26) des Luftleitelements (22a, 22b) mündet, und
ferner umfassend mindestens einen am Außen umfang des Elektronikgehäuses (1) angeordneten Luftleitkanal (20), der an der Befestigungswand (11) befestigt ist, wobei der Luftleitkanal (20) von mindestens einer im Bereich des Strömungsspaltes (27) angeordneten axial verlaufenden Kanalöffnung (28) in der Befestigungswand (11) zu einem zu kühlenden Bereich am Außenumfang des Elektronikgehäuses (1) verläuft.

2. Motor nach Anspruch 1,
**dadurch gekennzeichnet, dass**
das Luftförderelement (14) als Radiallüfterrad ausgebildet ist.

3. Motor nach Anspruch 1 oder 2,
**dadurch gekennzeichnet, dass**
das Luftleitelement (22a) an der Befestigungswand (11) befestigbar und zwischen der Befestigungswand (11) und dem Luftförderelement (14) angeordnet ist, wobei die Ansaugöffnung (16) des Luftförderelements (14) in Richtung der Befestigungswand (11) ausgerichtet ist.

4. Motor nach Anspruch 1 oder 2,
**dadurch gekennzeichnet, dass**
das Luftleitelement (22b) an der Befestigungswand (11) befestigbar und das Luftförderelement (14) innerhalb des Luftleitelementes (22b) angeordnet ist, wobei die Ansaugöffnung (16) des Luftförderelements (14) von der Befestigungswand (11) wegweisend ausgerichtet ist.

5. Motor nach einem der Ansprüche 1 bis 4,
**gekennzeichnet durch**
eine die Befestigungswand (11) bildende Tragkonstruktion (10), umfassend die Montageöffnung (30) zur Aufnahme des Elektronikgehäuses (1), wobei die Statorbuchse (3) und das Luftleitelement (22a, 22b) an der Tragkonstruktion (10) befestigt sind, und wobei die Kanalöffnung (28) radial zwischen der Statorbuchse (3) und dem Luftleitelement (22a, 22b) in der Tragkonstruktion (10) angeordnet ist.

6. Motor nach einem der Ansprüche 1 oder 5,
**dadurch gekennzeichnet, dass**
der Luftleitkanal (20) an seinem am Außenumfang des Elektronikgehäuses (1) anliegenden Ende einen ringförmig umlaufenden Ansatz (21) aufweist, der an den Außenumfangsverlauf des Elektronikgehäuses (1) formmäßig angepasst ist.

7. Motor nach einem der Ansprüche 1 bis 6,
**dadurch gekennzeichnet, dass**
die Gehäusekühlrippen (7) durch den Luftleitkanal (20) umfangsgemäß abgedeckt werden.

8. Motor nach einem der Ansprüche 1 bis 7,
**dadurch gekennzeichnet, dass**
die Statorbuchse (3) an ihrer Außenwandung Statorkühlrippen (8) aufweist, die durch das Luftleitelement (22a, 22b) umfangsgemäß abgedeckt werden.

9. Motor nach einem der Ansprüche 1 bis 8,
**dadurch gekennzeichnet, dass**
das Luftförderelement (14) auf der Seite des Luftleitelementes (22a) am Rand der Ansaugöffnung (16) einen trichterförmigen Ringkragen (29), und das Luftleitelement (22a) auf der Seite des Luftförderelementes (14) am Rand der Durchströmöffnung (26) eine umlaufende Ringnut (33) aufweist, wobei der Ringkragen (29) in die Ringnut (33) hineinragt und Ringkragen (29) und Ringnut (33) den Dichtspalt bilden.

## Claims

1. A motor, designed as an external rotor motor, comprising an electronics housing (1), a mounting wall (11), a stator having a stator bushing (3) and a stator laminated core (4) having motor windings, a rotor (5) and an annular air conveying element (14), connected in a torque-proof manner to the rotor (5), wherein the motor having the stator bushing (3) is mounted to the mounting wall (11) having a mounting opening (30) such that the electronics housing (1) is located on the one side of the mounting wall (11), and the stator as well as the rotor (5) are located on the other side of the mounting wall (11), and wherein the electronics housing (1) has housing cooling ribs (7) at an outer wall, further comprising
an annular air conveying element (22a, 22b), mountable to the mounting wall (11) independently from the motor, wherein the air conveying element (22a, 22b) surrounds the stator bushing (3), and a flow space (35) is being formed between the air conveying element (22a, 22b), the mounting wall (11) and an outer circumference of the stator bushing (3), wherein the flow space (35) is open on the side of the electronics housing (1) by means of at least one flow gap (27) in the direction of the mounting wall (11), and wherein the air conveying element (14) opens into a rotor-side, circumferential through-flow opening (26) of the air conveying element (22a, 22b) with a circumferential suction opening (16) open in axial direction via a sealing gap, and
further comprising at least one air conveying channel (20) arranged at an outer circumference of the electronics housing (1), said channel being mounted to the mounting wall (11), wherein the air conveying channel (20) extends from at least an axially extending channel opening (28) in the mounting wall (11), located in the region of the flow gap (27), to an area to be cooled at the outer circumference of the electronic housing (1).

2. The motor according to claim 1,
**characterised in that**
the air conveying element (14) is designed as a radial fan wheel.

3. The motor according to claim 1 or 2,
**characterised in that**
the air conveying element (22a) is arranged to be mountable to the mounting wall (11) and between the mounting wall (11) and the air conveying element (14), wherein the suction opening (16) of the air conveying element (14) is aligned in the direction of the mounting wall (11).

4. The motor according to claim 1 or 2,
**characterised in that**
the air conveying element (22b) is mountable to the mounting wall (11) and the air conveying element (14) is arranged within the air conveying element (22b), wherein the suction opening (16) of the air conveying element (14) is aligned facing away from the mounting wall (11).

5. The motor according to any of claims 1 to 4,
**characterised by**
a support structure (10) forming the mounting wall (11), comprising the mounting opening (30) for receiving the electronics housing (1), wherein the stator bushing (3) and the air conveying element (22a, 22b) are mounted to the support structure (10), and wherein the channel opening (28) is arranged radially between the stator bushing (3) and the air conveying element (22a, 22b) in the support structure (10).

6. The motor according to any of claims 1 or 5,
**characterised in that**
the air conveying channel (20) has an annular circumferential attachment (21) abutting to the outer circumference of the electronic housing (1), which attachment is form-fitted to the outer circumferential extension of the electronic housing (1).

7. The motor according to any of claims 1 to 6,
**characterised in that**
the housing cooling ribs (7) are covered circumferentially by means of the air conveying channel (20).

8. The motor according to any of claims 1 to 7,
**characterised in that**
the stator bushing (3) has stator cooling ribs (8) at its outer wall, which ribs are covered circumferentially by means of the air conveying element (22a, 22b).

9. The motor according to any of claims 1 to 8,
**characterised in that**
the air conveying element (14) has a funnel-shaped ring collar (29) on the side of the air conveying element (22a) at the edge of the suction opening (16), and the air conveying element (22a) has a circumferential annular groove (33) on the side of the air conveying element (14) at the edge of the through-flow opening (26), wherein the annular collar (29) projects into the annular groove (33) and annular collar (29) and annular groove (33) form the sealing gap.

## Revendications

1. Moteur réalisé en tant que moteur à induit extérieur, comprenant un boîtier électronique (1), une paroi de fixation (11), un stator avec une douille de stator (3) et un paquet de tôles statoriques (4) avec enroulements de moteur, un rotor (5) et un élément de transport d'air (14) annulaire, relié solidaire en rotation au rotor (5), dans lequel le moteur est fixé avec la douille de stator (3) au niveau de la paroi de fixation (11) présentant une ouverture de montage (30) de sorte que le boîtier électronique (1) se trouve sur l'un côté de la paroi de fixation (11) et le stator ainsi que le rotor (5) se trouvent sur l'autre côté de la paroi de fixation (11), et dans lequel le boîtier électronique (1) présente des nervures de refroidissement de boîtier (7) au niveau d'une paroi extérieure, comprenant en outre un élément de conduite d'air (22a, 22b) annulaire pouvant être monté indépendamment du moteur au niveau de la paroi de fixation (11), dans lequel l'élément de conduite d'air (22a, 22b) entoure la douille de stator (3) et un espace d'écoulement (35) s'étendant en direction circonférentielle est formé entre l'élément de conduite d'air (22a, 22b), la paroi de fixation (11) et une circonférence extérieure de la douille de stator (3), dans lequel l'espace d'écoulement (35) est ouvert au niveau du côté du boîtier électronique (1) par au moins une fente d'écoulement (27) en direction de la paroi de fixation (11), et dans lequel l'élément de transport d'air (14) débouche avec une ouverture d'aspiration (16) circonférentielle, ouverte en direction axiale par le biais d'une fente d'étanchéité dans une ouverture de passage d'écoulement (26) circonférentielle, côté rotor de l'élément de conduite d'air (22a, 22b), et
comprenant en outre au moins un canal de conduite d'air (20) agencé au niveau de la circonférence extérieure du boîtier électronique (1), qui est fixé au niveau de la paroi de fixation (11), dans lequel le canal de conduite d'air (20) d'au moins une ouverture de canal (28) s'étendant axialement agencée dans la zone de la fente d'écoulement (27) dans la paroi de fixation (11) s'étend vers une zone à refroidir au niveau de la circonférence extérieure du boîtier électronique (1).

2. Moteur selon la revendication 1,
**caractérisé en ce que**
l'élément de transport d'air (14) est réalisé en tant que roue de ventilateur radial.

3. Moteur selon la revendication 1 ou 2,
**caractérisé en ce que**
l'élément de conduite d'air (22a) peut être fixé au niveau de la paroi de fixation (11) et est agencé entre la paroi de fixation (11) et l'élément de transport d'air (14), dans lequel l'ouverture d'aspiration (16) de l'élément de transport d'air (14) est orientée en direction de la paroi de fixation (11).

4. Moteur selon la revendication 1 ou 2,
**caractérisé en ce que**
l'élément de conduite d'air (22b) peut être fixé au niveau de la paroi de fixation (11) et l'élément de transport d'air (14) est agencé à l'intérieur de l'élément de conduite d'air (22b), dans lequel l'ouverture d'aspiration (16) de l'élément de transport d'air (14) est orienté en s'éloignant de la paroi de fixation (11).

5. Moteur selon l'une quelconque des revendications 1 à 4,
**caractérisé par**
une structure porteuse (10) formant la paroi de fixation (11), comprenant l'ouverture de montage (30) pour la réception du boîtier électronique (1), dans lequel la douille de stator (3) et l'élément de conduite d'air (22a, 22b) sont fixés au niveau de la structure porteuse (10), et dans lequel l'ouverture de canal (28) est agencée radialement entre la douille de stator (3) et l'élément de conduite d'air (22a, 22b) dans la structure porteuse (10).

6. Moteur selon l'une quelconque des revendications 1 à 5,
**caractérisé en ce que**
le canal de conduite d'air (20) présente au niveau de son extrémité appliquée à la circonférence extérieure du boîtier électronique (1) un appendice circonférentiel annulaire (21), dont la forme est adaptée à l'allure circonférentielle extérieure du boîtier électronique (1).

7. Moteur selon l'une quelconque des revendications 1 à 6,
**caractérisé en ce que**
les nervures de refroidissement de boîtier (7) sont recouvertes circonférentiellement par le canal de conduite d'air (20).

8. Moteur selon l'une quelconque des revendications 1 à 7,
**caractérisé en ce que**
la douille de stator (3) présente au niveau de sa paroi extérieure des nervures de refroidissement de stator (8), qui sont recouvertes circonférentiellement par l'élément de conduite d'air (22a, 22b).

9. Moteur selon l'une quelconque des revendications 1 à 8,
**caractérisé en ce que**
l'élément de transport d'air (14) présente sur le côté de l'élément de conduite d'air (22a) au bord de l'ouverture d'aspiration (16) une collerette annulaire en forme d'entonnoir (29), et l'élément de conduite d'air (22a) présente sur le côté de l'élément de transport d'air (14) au bord de l'ouverture de passage d'écoulement (26) une rainure annulaire circonférentielle (33), dans lequel la collerette annulaire (29) pénètre dans la rainure annulaire (33) et la collerette annulaire (29) et la rainure annulaire (33) forment la fente d'étanchéité.
